# EUROPÄISCHE PATENTSCHRIFT

(11) **EP 0 841 254 B1**
(45) Veröffentlichungstag und Bekanntmachung des Hinweises auf die Patenterteilung: **25.09.2002**
(21) Anmeldenummer: 97117449.5
(22) Anmeldetag: 09.10.1997
(51) Int. Cl.: B65D 19/24, B65D 19/38

(54) **Mehrweg-Transportpackung für technische Geräte**
Reusable transport container for technical equipment
Récipient de transport réutilisable pour appareils techniques

(30) Priorität: 12.11.1996 DE 19646608; 12.11.1996 DE 19646638; 13.11.1996 DE 19646884
(43) Veröffentlichungstag der Anmeldung: 13.05.1998
(73) Patentinhaber: Linpac stucki Kunststoffverarbeitung GmbH, 32107 Bad Salzuflen (DE)
(72) Erfinder: Korte, Klaus, D-32107 Bad Salzuflen (DE); Prödel, Ulrich, D-32108 Bad Salzuflen (DE); Westerheide, Dirk, D-33775 Versmold (DE)
(74) Vertreter: Junius, Walther, Dr.

(56) Entgegenhaltungen:
- DE-A- 4 425 724
- DE-U- 29 513 797
- FR-A- 2 213 883
- US-A- 2 870 980
- US-A- 5 154 286

## Beschreibung

Die Erfindung betrifft eine Mehrweg-Transportverpackung für technische Geräte, bestehend aus einer Palette, einem Deckel und vier in den Ecken angeordneten rechtwinkligen Stützen, wobei diese Teile nach dem Aufsetzen des technischen Gerätes auf die Palette zusammensteckbar sind und durch ein die Palette und den Deckel umschlingendes Band im zusammengesteckten Zustand zusammengehalten und gesichert werden, und für den Leertransport wieder auseinandernehmbar und zu einer volumensparenden Einheit zusammensetzbar sind.

Durch die zwischen Palette und Deckel eingebauten Stützen sollen vertikale, von darüber gestapelten, in derselben Weise verpackten Geräten herrührende Kräfte aufgefangen und an die Bodenpalette weitergeleitet werden, ohne daß diese Kräfte auf das verpackte Gerät geleitet werden.

Ein Problem von Mehrweg-Transportverpackungen dieser Art ist es, daß die Abmessungen des zu transportierenden Gerätes Stützen von solcher Länge erfordern, daß diese, wenn sie beim Leertransport zwischen Deckel und Palette gelagert werden, seitlich über den Deckel bzw. die Palette hinausstehen.

Das ist nicht der Fall, wenn wie bei einer ersten Ausführungsform der Transportverpackung der DE 94 16 778 U1 die Stützen als teleskopierbare und dadurch in ihrer Länge an das jeweilige Gerät anpaßbare Stäbe gebildet sind, die zwischen die den Boden der Verpackung bildende Palette und den Deckel eingesetzt werden und die in ihrer Länge so verkürzt werden können, daß sie ohne ein Überstehen zwischen Palette und Deckel gelagert werden können. Diese Ausführung der Transportverpackung hat den Nachteil, daß die Länge der Stützen vor und nach dem Transport von Hand verändert werden muß, wobei der Packer darauf achten muß, daß die Länge sämtlicher Stützen die gleiche zu sein hat. Die Handhabung ist somit umständlich und zeitaufwendig. Auch besteht die Gefahr, daß, wenn seitliche, horizontal wirkende Kraftkomponeneten auftreten, wie sie sowohl beim übereinanderstapeln als auch während des Transportes auftreten können, diese vom Gerät selbst aufgefangen werden müssen, was zu Beschädigungen des verpackten Gerätes führen kann.

Um dieses zu vermeiden kann man in ihrer Länge nicht veränderbare Stützen von winkelförmigem Querschnitt verwenden, die dann aber beim Leertransport, wenn sie zwischen Palette und Deckel gelagert werden, über die Seiten von Palette und Deckel überstehen, wie dieses bei einer zweiten Ausführungsform der DE 94 16 778 U1 der Fall ist. Diese Stützen von winkelförmigem Querschnitt werden in an den Ecken der Palette und des Deckels angeordnete Schlitze eingesteckt.

Eine weitere mit Eckwinkeln, Palette und Deckel ausgestattete Verpackung für technische Geräte ist aus der DE 295 09 038 bekannt geworden. Bei dieser sind winkelförmige Stützen aus seitlich über Scharniere aneinanderhängenden Teilstücken gefertigt, die ihrerseits mittig mit je einem weiteren Scharnier versehen sind. Das ergibt eine wenig feste Konstruktion.

Die Erfindung vermeidet die Nachteile des Standes der Technik. Es ist die Aufgabe der Erfindung, mit einfachen Mitteln die Verpackung so zu gestalten, daß beim Leertransport zurück zum Gerätehersteller die als Stützen dienenden Eckwinkel der Verpackung leicht handhabbar zwischen Palette und Deckel ohne ein überstehen unterzubringen' sind.

Die Erfindung löst das ihr zugrunde liegende Problem durch aus zwei Stücken zusammengesteckte rechtwinklige Stützen, welche für den Rücktransport auseinandernehmbar und dadurch kürzer sind.

Die Erfindung läßt sich in einer Reihe von Ausführungsformen realisieren:

Diesen Ausführungsformen ist gemeinsam, daß die rechtwinkligen Stützen geteilt sind, ihre Teile eine Länge kürzer als die Diagonale der Palettenoberfläche oder der Deckelunterfläche aufweisen und ihre beiden Teile für den Gerätetransport miteinander verbindbar sind.

Eine Ausführungsform besteht darin, daß die Stützen aus einem Teil bestehen, der mit dem Deckel fest verbunden ist, und einen weiteren freien Teil, der zwischen der Palette und dem fest mit dem Deckel verbundenen Teil einsetzbar ist, indem der freie Teil der Stützen mit seinem einen Ende in die Palette einsteckbar und mit seinem anderen Ende in den fest mit dem Deckel verbundenen Teil der Stütze einsteckbar ist.

Eine andere Ausführungsform besteht darin, daß die Stützen aus einem Teil bestehen, der mit der Palette fest verbunden ist, und einem weiteren freien Teil, der zwischen dem mit der Palette verbundenen Teil und dem Deckel einsetzbar ist, indem der freie Teil der Stützen mit seinem einen Ende in den Deckel einsteckbar und mit seinem anderen Ende in den fest mit der Palette verbundenen Teil der Stütze einsteckbar ist.

Eine weitere Ausführungsform besteht darin, daß zwischen Palette und Deckel außer den geteilten Stützen ein Ring angeordnet ist, wobei die Stützen aus einem Teil bestehen, der mit dem Deckel fest verbunden ist, und einem weiteren freien Teil, der mit seinem einen Ende in die Palette und mit seinem anderen Ende in den Ring einsteckbar ist, der zwischen die beiden Stützenteile eingesteckt ist.

Eine weitere Ausführungsform besteht darin, daß die Stützenteile mit ihrem einen Ende in den Deckel oder in die Palette, und mit ihrem anderen Ende in einen Ring einsteckbar sind, der zwischen den Stützenteilen angeordnet ist.

Alle Ausführungsformen der Erfindung zeichnen sich durch leichte Handhabbarkeit und durch Stabilität aus. Die Stützen stehen, wenn sie beim Leertransport zwischen Palette und Deckel gelagert sind, nicht über den Rand von Palette und Deckel über, da die Länge der Stützenteile kürzer als die Diagonale von Palette und Deckel ist.

Bei denjenigen Ausführungsformen, bei denen ein Stützenteil fest mit dem Deckel oder der Palette verbunden ist, ist es zur Schaffung eines geschlossenen Raumes für die Aufnahme der Stützenteile vorteilhaft, wenn zwischen dem Deckel (oder der Palette) und den hieran befestigten Stützenteilen eine den Freiraum zwischen den befestigten Stützenteilen schließende Wand angeordnet ist.

Zur Festlegung der freien Stützenteile ist es zweckmäßig, wenn die freien Teile der Stützen an ihren Seitenkanten Vorsprünge vorzugsweise von Hakenform aufweisen, mit denen die Stützen im Leertransport miteinander und mit der Palette verbindbar sind, oder wenn die freien Teile der Stützen an ihren dem festen Teil der Stützen und/oder der Palette bzw. dem Deckel zugewandten Ende einen gegenüber Ihrer Außenfläche zurückversetzten Vorsprung aufweisen, der in Ausnehmungen des festen Teils der Stützen oder des Ringes und der Palette oder des Deckels eingreift.

Bei Ausführungsformen der erfindungsgemäßen Mehrweg-Transportpackung mit Ring ist es zweckmäßig, daß der Ring aus zwei parallel zueinander verlaufenden Wänden gebildet ist, welche durch Rippen miteinander verbunden sind.

Diese Mehrweg-Transportpackung ist zweckmäßigerweise zur Erzielung einer langen Lebensdauer und niedriger Leertransportgewichte derart herstellbar, daß die Palette, der Deckel, der Ring und/oder die Stützen jeweils einstückig aus Kunststoff hergestellt sind.

Für die Befestigung der freien Stützenteile ist es zweckmäßig, daß die Oberseite der Palette (oder die Unterseite des Deckels) an ihrem Rand in den Ecken Ausnehmungen für das Einstecken der Vorsprünge an den freien Teilen der Stützen aufweist.

Um die erforderliche statische Stabilität zu erreichen, kann es zweckmäßig sein, daß die Wände der Stützen zwischen den stirnseitigen Vorsprüngen mit Verstärkungsrippen versehen sind. Dabei ist es vorteilhaft, wenn die Wände der Stützen an ihrer Außenseite glatt und an ihrer Innenseite mit Verstärkungsrippen versehen sind.

Diese Mehrweg-Transportpackung wird sowohl beim Gerätetransport als auch beim Leertransport durch mindestens ein Band zusammengehalten. Hierbei ist es zweckmäßig, auch dieses Band immer wieder zu verwenden. Damit dieses in einfacher Weise sowohl beim Gerätetransport als auch beim Leertransport erfolgen kann, ist es vorteilhaft, daß das die Transportpackung umschlingende Band eine aus zwei zusammenzuschiebenden endseitig angeordneten Teilen bestehende Steckkupplung aufweist, von denen von dem einen Teil 1 ein mittig am Band angeordnetes Doppel vorhanden ist oder daß der Umfang der mit dem zu transportierendem technischen Gerät versehenen Transportpackung ein ganzzahliges Vielfaches des Umfanges der als Leergut zusammengestellten Transportpackung beträgt.

Das Wesen der Erfindung ist nachstehend anhand eines in der Zeichnung schematisch dargestellten Ausführungsbeispieles näher erläutert. Es zeigen:
- Fig.1: eine perspektivische Ansicht der für den Transport eines technischen Gerätes zusammengestellten Verpackung.
- Fig.2: die Einzelteile dieser Transportpackung.
- Fig.3: eine perspektivische Ansicht der für den Rücktransport zusammengestellten leeren Verpackung.
- Fig.4: eine perspektivische Ansicht der für den Rücktransport zusammengestellten leeren Verpackung mit eingelagerten Stützen.
- Fig.5: die Einzelteile einer abgewandelten Transportpackung.
- Fig.6: eine perspektivische Ansicht der für den Transport eines technischen Gerätes zusammengestellten Verpackung der Fig.5.
- Fig.7: eine perspektivische Ansicht der für den Rücktransport zusammengestellten leeren Verpackung der Fig.5.
- Fig.8: die Einzelteile einer weiteren abgewandelten Transportpackung.
- Fig.9: die Einzelteile einer weiteren, mit einem Umfangsring versehenen Transportpackung.
- Fig.10: eine Ausführungsform, bei der die freien Stützen mit Haken zur Befestigung während des Leertransportes versehen sind.
- Fig.11: eine Ausführungsform, bei der alle Teile der geteilten Stützen frei sind und in einen mittig angeordneten Ring sowie in den Boden und in den Deckel beidseitig einsteckbar sind, im Zustand des Gerätetransportes
- Fig.12: die Ausführungsform der Fig.11 im Zustand des Leertransportes
- Fig.13: die Ausführungsform der Fig.11 im auseinandergenommenen Zustand,

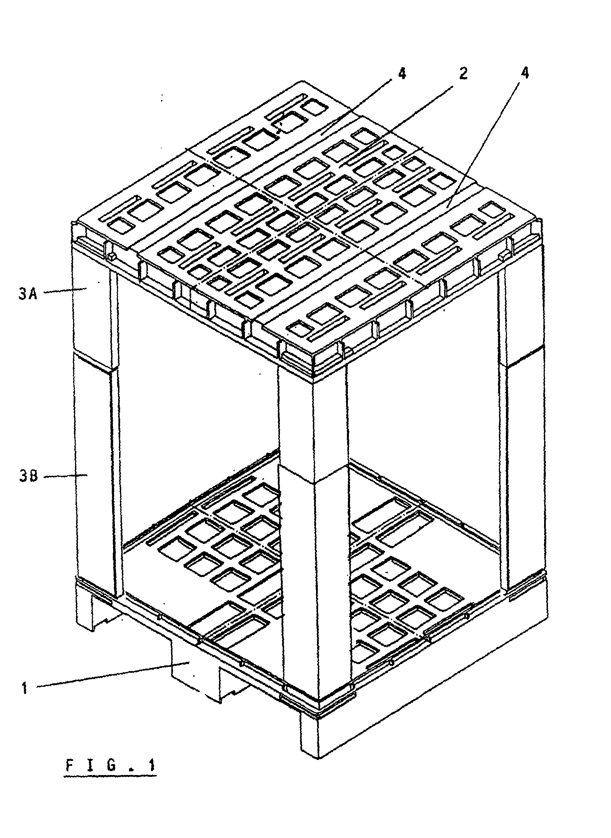

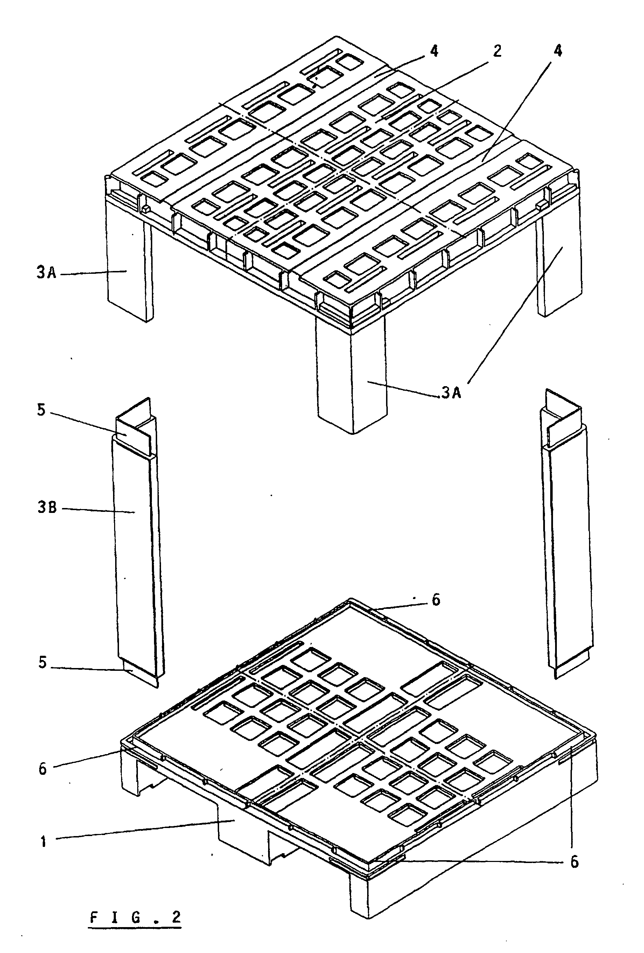

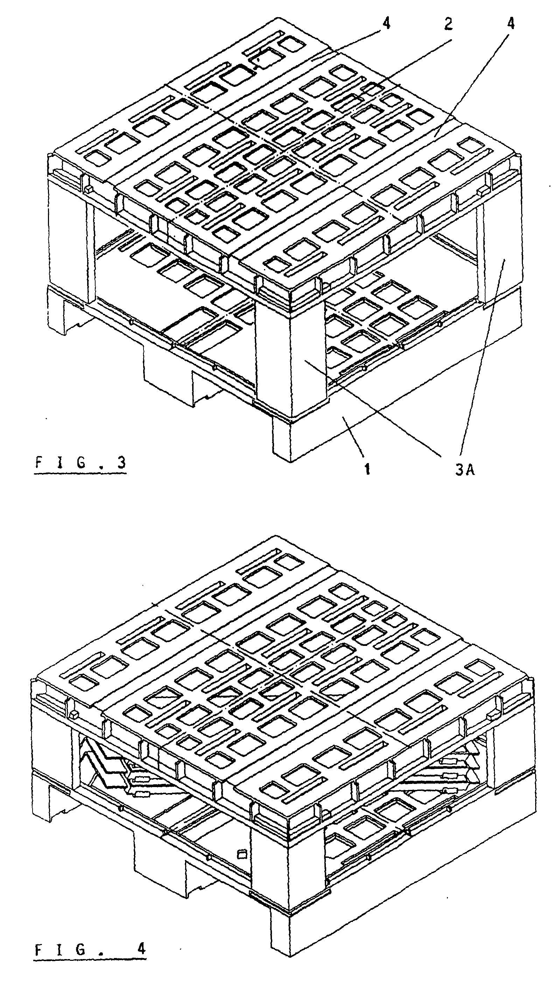

Die in den Fig.1-4 dargestellte Mehrweg-Transportpakkung für technische Geräte besteht aus einer Palette 1, einem Deckel 2 und in den vier Ecken angeordneten winkelförmigen Stützen 3. Und zwar weisen die Stützen 3 im Querschnitt einen rechten Winkel auf. Diese Bauteile der Transportpackung sind nach dem Aufsetzen des technischen Gerätes auf die Palette 1 zusammensteckbar. Sie werden durch zwei die Palette 1 und den Deckel 2 umschlingende nicht dargestellte Bänder in dem in Fig.1 dargestellten zusammengesteckten Zustand zusammengehalten und gesichert. Damit diese Bänder an einem geeigneten Ort befestigt werden und damit sie während des Transportes nicht abrutschen können, sind im Deckel 2 Nuten 4 eingeformt.

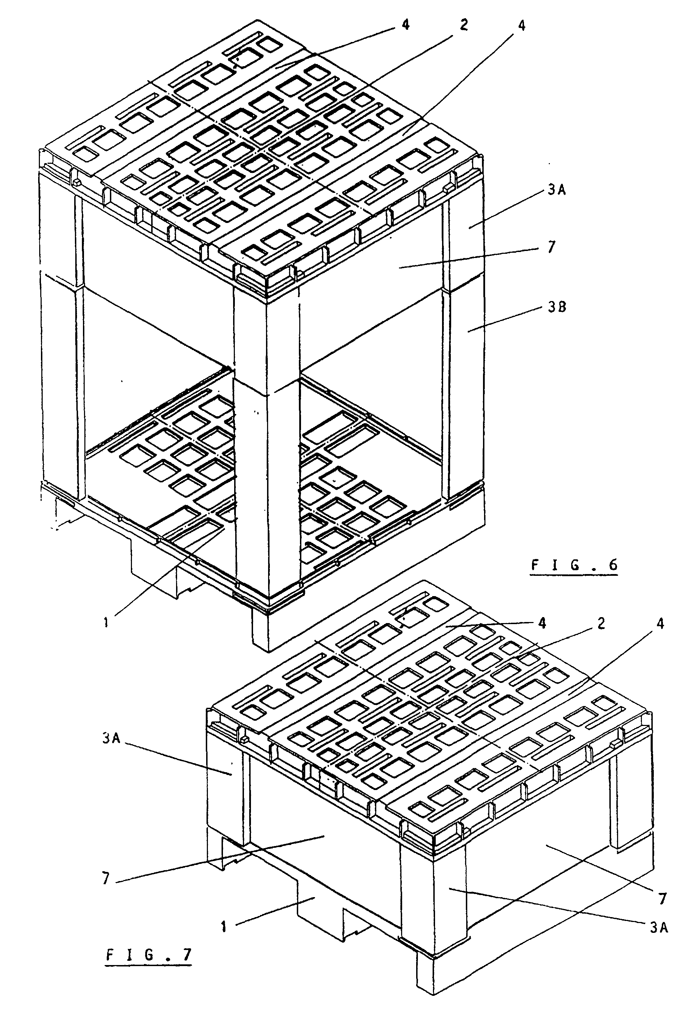

Die Stützen sind geteilt. Sie bestehen in den Fig.1-7 aus einem Teil 3A, der fest mit dem Deckel 2 verbunden ist, und einen weiteren freien Teil 3B, der zwischen der Palette 1 und dem fest mit dem Deckel 2 verbundenen Teil 3A der Stütze 3 einsetzbar ist, indem der freie Teil 3B der Stützen 3 mit seinem einen Ende in die Palette 1 einsteckbar und mit seinem anderen Ende in den fest mit dem Deckel 2 verbundenen Teil 3A der Stütze 3 einsteckbar ist.

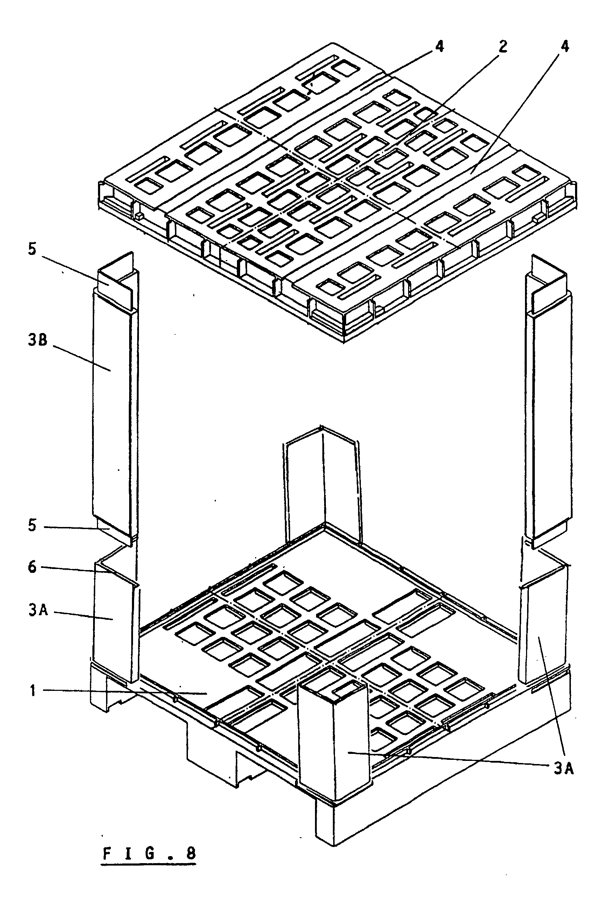

Im Ausführungsbeispiel der Fig.8 bestehen die Stützen 3 aus einem Teil 3A, der fest mit der Palette 1 verbunden ist, und einem weiteren freien Teil 3B, der zwischen dem fest,mit der Palette verbundenen Teil 3A der Stütze 3 und dem Deckel 2 einsetzbar ist, indem der freie Teil 3Bd der Stützen 3 mit seinem einen Ende in den Deckel 2 einsteckbar und mit seinem anderen Ende in den fest mit der Palette 1 verbundenen Teil einsteckbar ist.

Bei dieser Mehrweg-Transportpackung weisen die freien Teile 3B der Stützen 3 an ihren Enden bzw. Stirnseiten einen gegenüber Ihrer Außenfläche zurückversetzten Vorsprung 5 auf, der in Ausnehmungen 6 des festen Teils 3A der Stützen 3 und der Palette (1) eingreift.

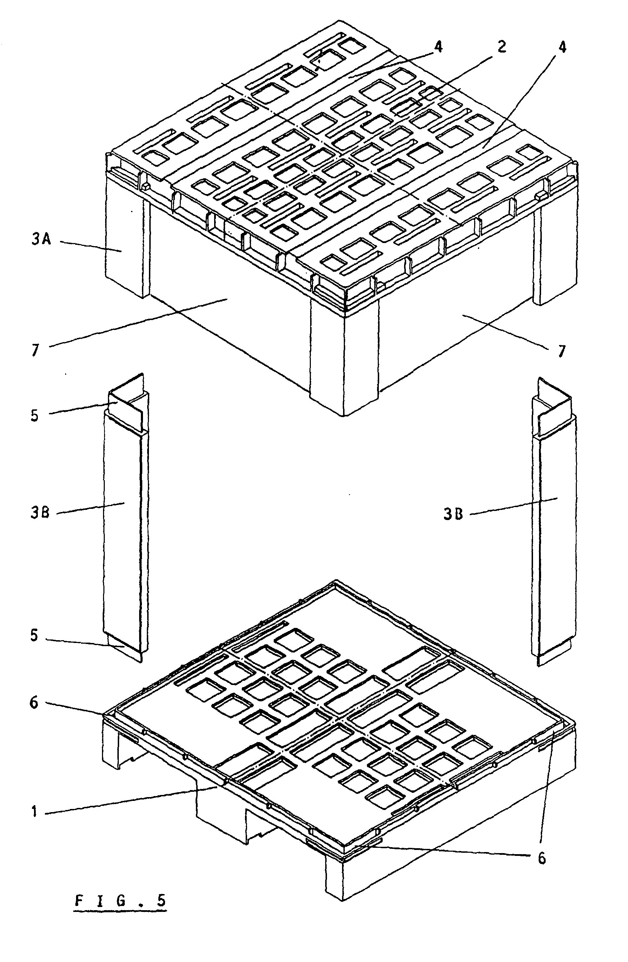

Bei dieser Mehrweg-Transportpackung weist der freie Teil 3B der Stützen 3 eine Länge auf, die kürzer als die Diagonale der Palettenoberfläche oder der Deckelunterfläche ist. Dadurch wird es möglich, daß der freie Teil 3B der Stützen 3 beim Leertransport diagonal zwischen der Palettenoberfläche und der Deckelunterfläche gelagert ist, wie die Fig.4 es zeigt.

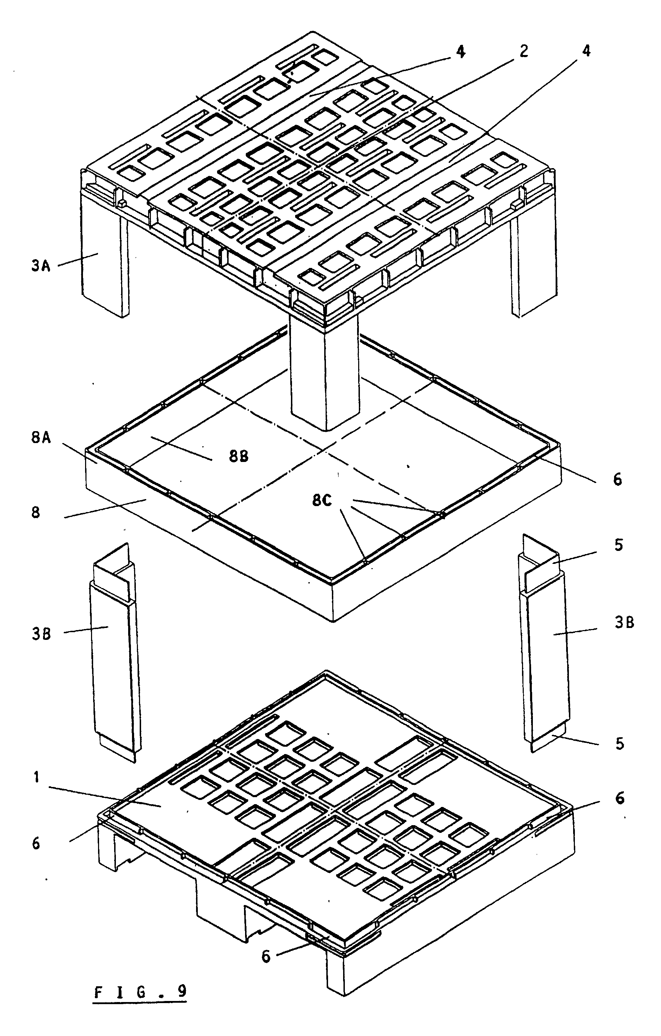

Im Ausführungsbeispiel der Fig.5-7 ist zwischen den am Deckel 2 befestigten Stützenteilen 3A eine den Freiraum zwischen diesen Stützenteilen 3A schließende Wand 7 angeordnet. Hierdurch ist ein geschlossener Raum für die Aufbewahrung der freien Stützenteile 3B während des Leertransportes dieser Verpackung geschaffen. Im Ausführungsbeispiel der Fig.9 ist zwischen der Palette 1 und dem Deckel 2 ein das nicht dargestellte technische Gerät umfassender Ring 8 angeordnet. Dieser Ring dient einerseits zum besseren Schutz des Gerätes, andererseits zur Anpassung vorhandener Teile der Geräteverpackung an die jeweilige Höhe des Gerätes. Die Stützen 3 sind hier ebenfalls nicht durchgehend von der Palette 1 bis zum Deckel 2 gefertigt, sondern sie sind jeweils in zwei kürzere Stützenteile 3A,3B unterteilt, von denen der eine Stützenteil 3A jeweils fest mit dem Deckel 2 verbunden ist. Die freien Stützenteile 3B der Stützen 3 sind mit ihrem einen Ende in den Ring 5 einsteckbar, mit ihrem anderen Ende sind sie in die Palette 1 einsteckbar.

Für das Einstecken in die Palette 1 und den Ring 8 weisen die Stützenteile 3A,3B an ihren dem Ring 8 und der Palette 1 zugewandten Enden einen gegenüber Ihrer Außenfläche zurückversetzten Vorsprung 5 auf, der in Ausnehmungen 7 des Ringes 8 und der Palette 1 eingreift.

Der Ring 8 besteht aus zwei parallel zueinander verlaufenden Wänden 8A,8B, welche durch Rippen 8C miteinander verbunden sind. Dadurch sind die für das Einstekken der Vorsprünge 6 an den Stützen 3 notwendigen Ausnehmungen von selbst entstanden.

Es ist besonders vorteilhaft, wenn die Palette 1, der Deckel 2, der Ring 8 und/oder die Stützen 3 jeweils einstückig aus Kunststoff hergestellt sind.

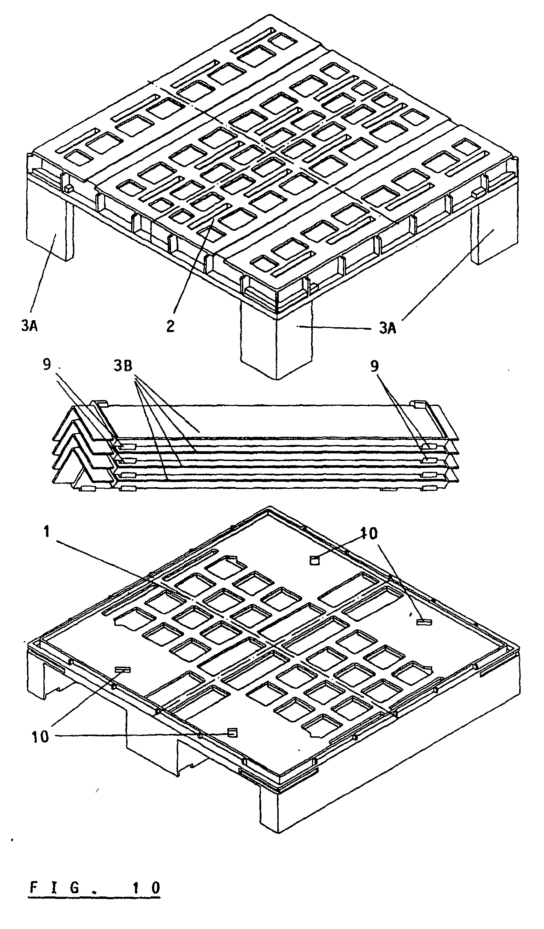

Bei der Ausführungsform der Fig.10 weisen die freien Stützen 3B hakenartige Vorsprünge 9 an ihren Seitenkanten zur Befestigung während des Leertransportes aneinander und an der Palette 1 auf. Wie man aus dem mittleren Teil der Darstellung der Fig.10 ersieht, sind die Vorsprünge 9 so geformt, daß einer über den anderen greift, wenn die Stützen 3B parallel zueinander aufeinander gelegt sind. Die Stützen 3B bilden so ein festes Paket. Die Palette 1 weist mit diesen hakenartigen Vorsprüngen 9 korrespondierende Ausnehmungen 10 auf, in die die hakenartigen Vorsprünge 9 der untersten Stütze 3B dieses Paketes eingreifen. Somit sind die freien Stützen 3B während des Leertransportes fest auf der Palette festgelegt.

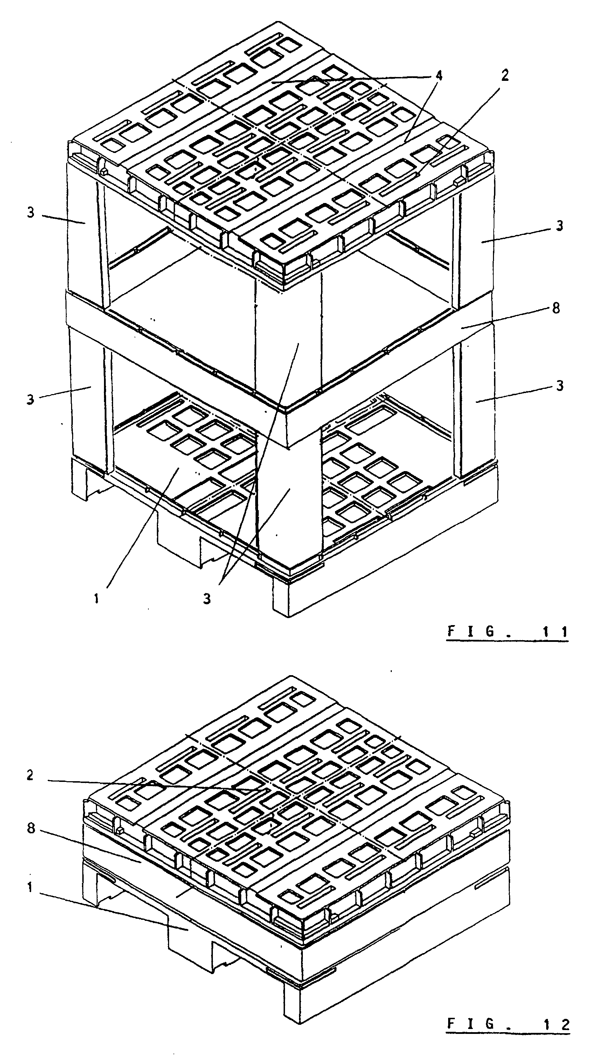

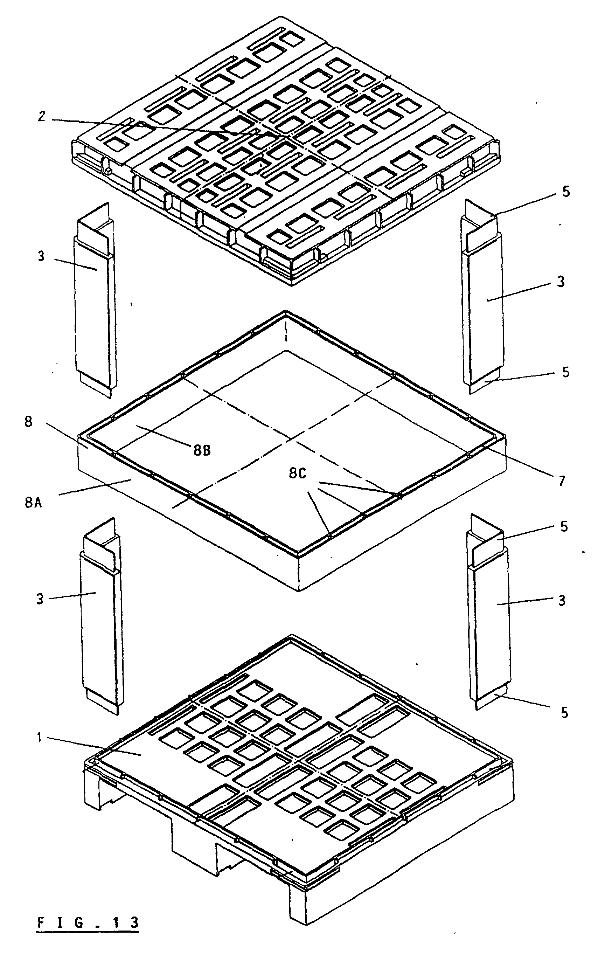

Die Fig.11 bis 13 zeigen eine andere Ausführungsform der Transportverpackung, bei der alle Teile der geteilten Stützen 3A,3B frei sind und in einen mittig angeordneten Ring 8 sowie in die den Boden bildende Palette 1 und in den Deckel 2 beidseitig einsteckbar sind, und zwar in Fig.11 im Zustand des Gerätetransportes, in Fig.12 im Zustand des Leertransportes und in Fig.13 im auseinandergenommenen Zustand. Durch die Kürze der so entstandenen Stützenteile 3A,3B lassen sich diese gut zwischen Palette 1 und Deckel 2 unterbringen, zumal die Höhe und das Volumen des zwischen Palette 1 und Deckel 2 gebildeten Raumes durch den zwischengelegten Ring 8 größer geworden sind.

Die Mehrweg-Transportpackung kann zur Erzielung höherer Standfestigkeit so gestaltet sein, daß die Wände der Stützen im Querschnitt profiliert sind, vorzugsweise wellenförmig gebildet sind, vorzugsweise in sinusformähnlichen, trapezförmigen oder rechteckförmigen Wellenzügen.

## Patentansprüche

1. Mehrweg-Transportverpackung für technische Geräte, bestehend aus einer Palette (1), einem Deckel (2) und vier in den Ecken angeordneten rechtwinkligen Stützen (3),
wobei diese Teile nach dem Aufsetzen des technischen Gerätes auf die Palette (1) zusammensteckbar sind und durch ein die Palette (1) und den Deckel (2) umschlingendes Band im zusammengesteckten Zustand zusammengehalten und gesichert werden,
und für den Leertransport wieder auseinandernehmbar und zu einer volumensparenden Einheit zusammensetzbar sind,
wobei die rechtwinkligen Stützen (3) geteilt sind, ihre Teile (3A,3B) eine Länge kürzer als die Diagonale der Palettenoberfläche oder der Deckelunterfläche aufweisen und ihre beiden Teile (3A,3B) für den Gerätetransport miteinander verbindbar sind,
und wobei die rechtwinkligen Stützen (3) entweder aus einem Teil (3A) bestehen, der mit dem Deckel (2) fest verbunden ist, und einen weiteren freien Teil (3B), der zwischen der Palette (1) und dem fest mit dem Deckel (2) verbundenen Teil (3A) einsetzbar ist,
indem der freie Teil (3B) der Stützen (3) mit seinem einen Ende in die Palette (1) einsteckbar und mit seinem anderen Ende in den fest mit dem Deckel (2) verbundenen Teil (3A) der Stütze (3) einsteckbar ist.
oder aus einem Teil (3A) bestehen, der mit der Palette (1) fest verbunden ist, und einem weiteren freien Teil (3B), der zwischen dem mit der Palette (1) verbundenen Teil (3A) und dem Deckel (2) einsetzbar ist,
indem der freie Teil (3B) der Stützen (3) mit seinem einen Ende in den Deckel (2) einsteckbar und mit seinem anderen Ende in den fest mit der Palette (1) verbundenen Teil (3A) der Stütze (3) einsteckbar ist.
oder daß zwischen Palette (1) und Deckel (2) außer den geteilten Stützen (3A,3B) ein Ring (8) angeordnet ist,
wobei die Stützen (3) aus einem Teil (3A) bestehen, der mit dem Deckel (2) fest verbunden ist, und einem weiteren freien Teil (3B), der mit seinem einen Ende in die Palette (1) und mit seinem anderen Ende in den Ring (8) einsteckbar ist, der zwischen die beiden Stützenteile (3A,3B) eingesteckt ist,
oder die Stützenteile (3A,3B) mit ihrem einen Ende in den Deckel (2) oder in die Palette (1) und mit ihrem anderen Ende in einen Ring (8) einsteckbar sind, der zwischen den Stützenteilen (3A,3B) angeordnet ist.

2. Mehrweg-Transportpackung nach Anspruch 1,
**dadurch gekennzeichnet,**
**daß** zwischen dem Deckel (2) (oder der Palette (1)) und den hieran befestigten Stützenteilen (3A) eine den Freiraum zwischen den befestigten Stützenteilen (3A) schließende Wand (7) angeordnet ist.

3. Mehrweg-Transportpackung nach Anspruch 1,
**dadurch gekennzeichnet,**
**daß** die freien Teile (3B) der Stützen (3) an ihren Seitenkanten Vorsprünge (9) vorzugsweise von Hakenform aufweisen, mit denen die Stützen (3) im Leertransport miteinander und mit der Palette (1) verbindbar sind.

4. Mehrweg-Transportpackung nach Anspruch 1,
**dadurch gekennzeichnet,**
**daß** die freien Teile (3B) der Stützen (3) an ihren dem festen Teil (3A) der Stützen (3) und/oder der Palette (1) bzw. dem Deckel (2) zugewandten Ende einen gegenüber Ihrer Außenfläche zurückversetzten Vorsprung (5) aufweisen, der in Ausnehmungen (6) des festen Teils (3A) der Stützen (3) oder des Ringes (8) und der Palette (1) oder des Deckels (2) eingreift.

5. Mehrweg-Transportpackung nach Anspruch 1,
**dadurch gekennzeichnet,**
**daß** der Ring (8) aus zwei parallel zueinander verlaufenden Wänden (8A,8B) gebildet ist, welche durch Rippen (8C) miteinander verbunden sind.

6. Mehrweg-Transportpackung nach Anspruch 1 oder 2,
**dadurch gekennzeichnet,**
**daß** die Palette (1), der Deckel (2), der Ring (8) und/oder die Stützen (3) jeweils einstückig aus Kunststoff hergestellt sind.

7. Mehrweg-Transportpackung nach Anspruch 1 oder 2,
**dadurch gekennzeichnet,**
**daß** die Oberseite der Palette (1) (oder die Unterseite des Deckels (2)) an ihrem Rand in den Ecken Ausnehmungen (6) für das Einstecken der Vorsprünge (5) an den freien Teilen (3B) der Stützen (3) aufweist.

8. Mehrweg-Transportpackung nach Anspruch 1,
**dadurch gekennzeichnet,**
**daß** die Wände der Stützen (3) zwischen den stirnseitigen Vorsprüngen mit Verstärkungsrippen versehen sind,
wobei vorzugsweise die Wände der Stützen (3) an ihrer Außenseite glatt und an ihrer Innenseite mit Verstärkungsrippen versehen sind.

9. Mehrweg-Transportpackung nach Anspruch 1,
**dadurch gekennzeichnet,**
**daß** das die Transportpackung umschlingende Band eine aus zwei zusammenzuschiebenden endseitig angeordneten Teilen bestehende Steckkupplung aufweist, von denen von dem einen Teil ein mittig am Band angeordnetes Doppel vorhanden ist.

10. Mehrweg-Transportpackung nach Anspruch 1,
**dadurch gekennzeichnet,**
**daß** der Umfang der mit zu transportierendem technischen Gerät versehenen Transportpackung ein ganzzahliges Vielfaches des Umfanges der als Leergut zusammengestellten Transportpackung beträgt.

## Claims

1. Returnable transport packaging for technical appliances, consisting of a pallet (1), a cover (2) and four right-angled supports (3) arranged in the corners, in which after placement of the technical appliance on the pallet (1) these parts can be assembled together and held together and locked in the assembled state by a strip surrounding the pallet (1) and the cover (2), and for transport when empty can be disassembled again and fitted together forming a volume-saving unit,
in which the right-angled supports (3) are divided, their parts (3A, 3B) exhibit a length shorter than the diagonal of the surface of the pallet or the underside of the cover and their two parts (3A, 3B) can be connected to one another for transport of the appliance,
and in which the right-angled supports (3) either consist of a part (3A) which is connected firmly to the cover (2), and of a further free part (3B) which can be fitted between the pallet (1) and the part (3A) connected firmly to the cover (2) in that the free part (3B) of the supports (3) can be inserted by one of its ends in the pallet (1) and by its other end in the part (3A) of the support (3) connected firmly to the cover (2),
or consist of a part (3A) which is connected firmly to the pallet (1), and of a further free part (3B) which can be fitted between the part (3A) connected to the pallet (1) and the cover (2) in that the free part (3B) of the supports (3) can be inserted by one of its ends in the cover (2) and by its other end in the part (3A) of the support (3) connected firmly to the pallet (1),
or in addition to the divided supports (3A, 3B) a ring (8) is arranged between the pallet (1) and the cover (2), in which the supports (3) consist of a part (3A) which is connected firmly to the cover (2), and of a further free part (3B) which can be inserted by one of its ends in the pallet (1) and by its other end in the ring (8) which is fitted between the two support parts (3A, 3B),
or the support parts (3A, 3B) can be inserted by one of their ends in the cover (2) or in the pallet (1) and by their other end in a ring (8) which is arranged between the support parts (3A, 3B).

2. Returnable transport packaging according to claim 1, **characterised in that** a wall (7) closing the free space between the fixed support parts (3A) is arranged between the cover (2) (or the pallet (1)) and the support parts (3A) fixed hereto.

3. Returnable transport packaging according to claim 1, **characterised in that** on their side edges the free parts (3B) of the supports (3) exhibit projections (9), preferably of hook shape, with which the supports (3) can be connected to one another and to the pallet (1) for transport when empty.

4. Returnable transport packaging according to claim 1, **characterised in that** at their end facing the fixed part (3A) of the supports (3) and/or the pallet (1) or the cover (2) the free parts (3B) of the supports (3) exhibit a projection (5) which is set back relative to their external surface and engages in recesses (6) in the fixed part (3A) of the supports (3) or the ring (8) and the pallet (1) or the cover (2).

5. Returnable transport packaging according to claim 1, **characterised in that** the ring (8) is formed of two walls (8A, 8B) which run parallel to one another and are connected to one another by ribs (8C).

6. Returnable transport packaging according to claim 1 or 2, **characterised in that** the pallet (1), the cover (2), the ring (8) and/or the supports (3) are each manufactured from plastic in one piece.

7. Returnable transport packaging according to claim 1 or 2, **characterised in that** at its edge in the corners the upper side of the pallet (1) (or the underside of the cover (2)) exhibits recesses (6) for insertion of the projections (5) on the free parts (3B) of the supports (3).

8. Returnable transport packaging according to claim 1, **characterised in that** between the projections on the front side the walls of the supports (3) are provided with reinforcing ribs, the walls of the supports (3) being preferably smooth on their outside and provided with reinforcing ribs on their inside.

9. Returnable transport packaging according to claim 1, **characterised in that** the strip surrounding the transport packaging exhibits a coupling consisting of two parts which are arranged at the ends and slid together and a duplicate of one part of which is present arranged in the middle of the strip.

10. Returnable transport packaging according to claim 1, **characterised in that** the circumference of the transport packaging with the technical appliance to be transported is a whole number multiple of the circumference of the transport packaging fitted together for transport when empty.

## Revendications

1. Emballage de transport réutilisable pour appareils techniques, constitué par une palette (1), un couvercle (2) et quatre montants à angle droit (3) disposés dans les coins,
dans lequel ces pièces peuvent être réunies par enfichage après la mise en place de l'appareil technique sur la palette (1) et être retenues mutuellement et fixées à l'état enfiché, par une bande entourant la palette (1) et le couvercle (2), et peuvent être à nouveau démontées et assemblées pour former une unité peu encombrante pour le transport à vide,
dans lequel les montants à angle droit (3) sont divisés, leurs parties (3A, 3B) possédant une longueur inférieure à la diagonale de la surface de la palette ou de la surface inférieure du couvercle et leurs deux parties (3A, 3B) pouvant être reliées entre elles pour le transport d'un appareil, et
dans lequel les montants à angle droit (3) sont constitués soit par une partie (3A), qui est reliée de façon fixe au couvercle (2), et par une autre partie libre (3B), qui peut être insérée entre la palette (1) et la partie (3A) reliée de façon fixe au couvercle (2),
auquel cas la partie libre (3B) des montants (3) peut être enfichée par l'une de ses extrémités dans la palette (1) et peut être enfichée, par son autre extrémité, dans la partie (3A) du montant (3) qui est reliée de façon fixe au couvercle (2),
soit par une partie (3A), qui est reliée de façon fixe à la palette (3), et par une autre partie libre (3B), qui peut être insérée entre la partie (3A) reliée à la palette (1) et le couvercle (2),
auquel cas la partie libre (3A) du montant (3) peut être enfichée, par l'une de ses extrémités, dans le couvercle (2) et peut être enfichée, par son autre extrémité, dans la partie (3A) du montant (3), qui est reliée de façon fixe à la palette (1),
ou bien dans lequel un anneau (8) est disposé entre la palette (1) et le couvercle (2) à l'extérieur des montants divisés (3A, 3B),
auquel cas les montants (3) sont constitués par une partie (3A), qui est reliée de façon fixe au couvercle (2), et par une autre partie libre (3B), qui peut être enfichée, par l'une de ses extrémités, dans la palette (1) et par son autre extrémité dans l'anneau (8) qui est enfiché entre les deux parties (3A, 3B) des montants;
ou les parties (3A, 3B) des montants peuvent être enfichées par l'une de leurs extrémités dans le couvercle (2) ou dans la palette (1) et par l'autre extrémité dans un anneau (8), qui est disposé entre les parties (3A, 3B) des montants.

2. Emballage de transport réutilisable selon la revendication 1, **caractérisé en ce qu'**entre le couvercle (2) (ou la palette 1)) et les parties (3A) des montants, fixées à cette pièce, est disposée une paroi (7), qui ferme l'espace libre entre les parties fixées (3A) des montants.

3. Emballage de transport réutilisable selon la revendication 1, **caractérisé en ce que** les parties libres (3B) des montants (3) comportent, au niveau de leurs bords latéraux, des parties saillantes (9) de préférence sous la forme de crochets, à l'aide desquelles les montants (3) peuvent être reliés entre eux et à la palette (1) lors du transport à vide.

4. Emballage de transport réutilisable selon la revendication 1, **caractérisé en ce que** les parties libres (3B) des montants (3) comportent, sur leurs extrémités tournées vers la partie fixe (3A) des montants (3) et/ou sur la palette (1) ou sur le couvercle (2), une partie saillante (5), qui est en retrait par rapport à leur surface extérieure et qui s'engage dans des évidements (6) de la partie fixe (3A) des montants (3) ou de l'anneau (8) et de la palette (1) ou du couvercle (2).

5. Emballage de transport réutilisable selon la revendication 1, **caractérisé en ce que** l'anneau (8) est formé par deux parois (8A, 8B) parallèles entre elles, qui sont reliées entre elles par des nervures (8C).

6. Emballage de transport réutilisable selon la revendication 1 ou 2, **caractérisé en ce que** la palette (1), le couvercle (2), l'anneau (8) et/ou les montants (3) sont réalisés respectivement d'un seul tenant en matière plastique.

7. Emballage de transport réutilisable selon la revendication 1 ou 2, **caractérisé en ce que** la face supérieure de la palette (1) (ou la face inférieure du couvercle (2)) comporte au niveau de son bord, dans les coins, des évidements (6) pour l'enfichage des parties saillantes (5) situées sur les parties libres (3B) des montants (3).

8. Emballage de transport réutilisable selon la revendication 1, **caractérisé en ce que** les parois des montants (3) comportent des nervures de renforcement entre les parties saillantes frontales,
de préférence les parois des montants (3) étant lisses sur leur face extérieure et pourvues de nervures de renforcement au niveau de leur face intérieure.

9. Emballage de transport réutilisable selon la revendication 1, **caractérisé en ce que** la bande, qui entoure l'emballage de transport, comporte un accouplement à enfichage constitué par deux parties disposées à ses extrémités et destinées à être assemblées par coulissement, un double de l'une des deux parties étant disposé au centre sur la bande.

10. Emballage de transport réutilisable selon la revendication 1, **caractérisé en ce que** la périphérie de l'emballage de transport équipé d'un appareil technique à transporter est égale à un multiple entier de la périphérie de l'emballage de transport assemblé en tant qu'objet à vide.
